(19) Europäisches Patentamt
European Patent Office
Office européen des brevets

(11) EP 0 853 064 B1

(12) EUROPEAN PATENT SPECIFICATION

(45) Date of publication and mention of the grant of the patent:
**23.02.2000 Bulletin 2000/08**

(51) Int Cl.[7]: **C01B 15/026**

(21) Application number: **97122264.1**

(22) Date of filing: **17.12.1997**

# (54) Process for the synthesis of hydrogen peroxide

Verfahren zur Synthese von Wasserstoffperoxid

Procédé de synthèse de peroxyde d'hydrogène

(84) Designated Contracting States:
**BE DE FR GB**

(30) Priority: **10.01.1997 IT MI970025**

(43) Date of publication of application:
**15.07.1998 Bulletin 1998/29**

(73) Proprietor: **ENICHEM S.p.A.**
**20124 Milano (IT)**

(72) Inventors:
- **Bortolo, Rossella**
  **Novara (IT)**
- **D'Aloisio, Rino**
  **Novara (IT)**
- **Bianchi, Daniele**
  **Arese (Milano) (IT)**
- **Soattini, Sergio**
  **Cerano (Novara) (IT)**
- **Querci, Cecilia**
  **Novara (IT)**

(74) Representative: **De Gregori, Antonella et al**
**Ing. Barzano & Zanardo Milano S.p.A.**
**Via Borgonuovo 10**
**20121 Milano (IT)**

(56) References cited:
**EP-A- 0 229 408**
**US-A- 2 871 102**
**US-A- 4 303 632**

EP 0 853 064 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a process for the synthesis of hydrogen peroxide by the reaction of oxygen with a primary or secondary alcohol in an alcohol/water biphasic system, which uses a particular catalytic complex.

Hydrogen peroxide is a commercially important compound which is widely used as a bleach in the textile and paper industries, in the chemical industry in oxidation processes and in the environmental field as a biocide.

Processes for the preparation of hydrogen peroxide by the oxidation of secondary alcohols such as isopropanol and methylbenzylalcohol (US 2.871.102, EP-378.388) or high-boiling secondary alcohols such as diaryl methanol (US 4.303.632) with oxygen, are known and used industrially.

These known processes however substantially suffer from disadvantages deriving from the necessity of operating at high reaction temperatures (generally between 100 and 250°C), the partial oxidation of the ketone which is formed as main co-product, the requirement of the presence of a radical generator (for example peroxide) as initiator, the presence of a hydrogen peroxide stabilizer (orthophosphoric or sodium pyrophosphate) and in some cases a salt of a metal such as Co, Fe and Cr.

In addition, these processes which are carried out in homogeneous phase are complicated by the necessity of separating and recovering the hydrogen peroxide from the reaction mixture, containing the by-products which are formed in the oxidation reaction.

It is one object of the present invention to obtain hydrogen peroxide by a simple, economical process with an easy industrial embodiment, which does not have the disadvantages of the processes of the known art.

It has now been found, according to the present invention, that the above object can be reached if the reaction between oxygen and alcohol is carried out in the presence of small quantities of a very active and selective catalytic system, consisting of a palladium salt, an aromatic nitrogenated ligand and optionally an organic or inorganic acid.

The use of this catalyst has substantial advantages and in particular the possibility of operating at low temperatures and of also using primary alcohols.

In addition, the use of a biphasic system, in which the aqueous solution contains only hydrogen peroxide, allows the organic phase to be reused as an operating solution for subsequent reactions and the possible direct use of hydrogen peroxide in aqueous phase. This has evident benefits from an economical point of view.

In accordance with this, the present invention relates to a process for the synthesis of hydrogen peroxide by the reaction of oxygen with a primary or secondary alcohol in an alcohol/water biphasic system, in the presence of a catalytic complex consisting of:

(a) an organic or inorganic salt of palladium;
(b) an aromatic nitrogenated mono or polydentate ligand (Chel) capable of binding itself to the palladium atom; and optionally
(c) an organic or inorganic acid.

The catalytic complex, soluble in the organic phase, can be prepared in situ, or it can be a pre-formed complex.

In addition the catalytic complex can be supported on inert porous carriers selected from cation exchange resins of the macroporous polymeric type. In the latter case the synthesis of hydrogen peroxide can be carried out without free acid.

Monodentate nitrogenated ligands suitable for the purposes of the present invention can be nitrogenated heterocyclic compounds such as pyridine and its derivatives such as, for example, alkylpyridine.

Bidentate nitrogenated ligands can be selected from those having general formula (I)

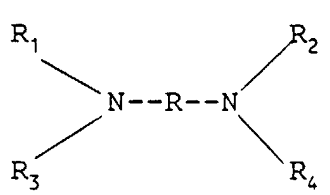

(I)

wherein:
R represents a $C_2$-$C_4$ alkyl radical possibly substituted with an alkyl or aryl group; $R_1$-$R_4$, the same or different, each represent a $C_1$-$C_{10}$ alkyl radical, a $C_3$-$C_{10}$ cycloalkyl radical or a $C_6$-$C_{12}$ aromatic radical possibly substituted with a $C_1$-$C_4$ alkyl or alkoxyl radical; or from those having general formula (II):

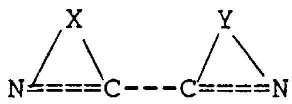

(II)

wherein:

X and Y, the same or different, represent a bridged organic group having at least three atoms in the bridge of which at least two are carbon atoms. When, as well as the carbon atoms, groups X and Y contain other atoms, these are preferably selected from oxygen or nitrogen.

Examples of polydentate nitrogenated ligands are: 2,2'-bipyridyl, 4,4'-dimethyl-2,2'bipyridyl, 4,4'-diphenyl-2,2'bipyridyl, 5-methyl-2,2'bipyridyl, 5,5'-dimethyl-2,2'-bypyridyl, 1,10-phenanthroline, 4-methyl-1,10-phenanthroline, 5-methyl-1,10-phenanthroline, 4,7-dimethyl-1,10-phenanthroline, 3,8-dimethyl-1,10-phenanthroline, 4,7-diphenyl-1,10-phenanthroline, 4,7-dichloro-1,10-phenanthroline, 3,4,7,8-tetramethyl-1,10-phenanthroline, 1,2-N,N,N',N'-tetramethylpropanediamine, 1,3,N,N,N',N'-tetramethylethylenediamine, 4,4'-dimethyl-5,5'-bioxazole, 2,2'-bipyrimidine, 2,2'-tetrahydro-bioxazole, 2,9-dichloro-1,10-phenanthroline, 2,9-dibutyl-phenanthroline, 2,9-di-methylphenanthroline, 2,9-dimethyl-4,7-diphenyl-1,10-phenanthroline, 2,4,6-tri-(2-pyridyl)-1,3,5-triazine and 6,7-dimethyl-2,3-di(2-pyridyl)-quinoxaline.

Preferred ligands for the purposes of the present invention are 2,4,6-tri-(2-pyridyl)-1,3,5-triazine, 6,7-dimethyl-2,3-di(2-pyridyl)-quinoxaline, and phenanthrolines substituted in position 2,9 such as for example: 2,9-dichloro-1,10-phenanthroline, 2,9-dimethyl-4,7-diphenyl-1,10-phenanthroline and 2,9-dibutyl- phenanthroline.

Advantageous results are obtained using molar ratios Chel/Pd ranging between 1:1 and 20:1, preferably between 1:1 and 3:1.

Examples of palladium salts which can be used in the process of the present invention can be selected from palladium acetate, palladium nitrate, palladium sulfate. Palladium acetate is preferred.

The quantity of palladium salt used in the process of the present invention is generally between 0.0001 and 0.05 moles per litre of organic phase, preferably between 0.0005 and 0.001 moles per litre of organic phase.

Examples of acids which can be used in the process of the present invention are selected from phosphoric acid, acetic acid, sulfuric acid, hydrochloric acid, benzoic acid, p-toluic acid, trimethylbenzoic acid, methanesulfonic acid, benzenesulfonic acid and diphenylphosphinic acid or from perfluorinated acids having the formula $C_nF_{2n+1}COOH$ with n between 1 and 15. Perfluoro-octanic acid and trifluoroacetic acid are preferred.

The quantity of acid used in the process of the present invention is selected so as to obtain a molar ratio acid/palladium ranging from 1/1 to 60/1, preferably between 2/1 and 20/1.

The alcohols are selected from linear or branched, primary or secondary aliphatic alcohols substituted by alkyl or aryl residues, immiscible with water. Examples of these alcohols are n-amyl alcohol, n-butanol, cyclohexanol, phenylethyl alcohol, phenylpropyl alcohol, n-octanol, benzyl alcohol, methoxy-benzyl alcohol. Cyclohexanol, phenylethyl alcohol and n-octanol are preferred.

The quantity of oxygen used in the reaction is selected so as to maintain a total pressure of more than 1 atm and preferably between 5 and 100 atm. A quantity of $O_2$ ranging from 5 to 50 atm is conveniently used.

According to an embodiment of the process of the present invention, the reaction can be carried out using air instead of pure oxygen.

The quantity of water is selected so as to generate a double phase. The volumetric ratio water:alcohol is conveniently between 30:70 and 70:30 and is preferably 60:40.

In the process of the present invention the alcohol is oxidized by the palladium which in turn is oxidized to form hydrogen peroxide according to the following scheme:

$$2R_2CHOH + Pd^{2+} \rightarrow 2R_2C{=}O + Pd^0 + 2H^+$$

$$Pd^0 + O_2 + 2H^+ \rightarrow Pd^{2+} + H_2O_2$$

The ketone generated during the reaction, soluble in the organic phase, does not interfere in the subsequent reaction cycles. The ketone can be reduced, however, to alcohol using the known techniques, or it can be used as reagent in organic synthesis processes. For example, when the alcohol is cyclohexanol, the corresponding ketone, cyclohexanone, can be used for the production of cyclohexanoxine (DE-1245371, EP-208311) and therefore caprolactam.

The process of the present invention can be carried out in batch or in continuous using a preformed catalytic

complex prepared in situ or supported.

For example, in a batch process which uses a catalytic complex prepared in situ, the palladium salt and nitrogenated ligand are dissolved in the organic solvent and the resulting mixture is reacted at room temperature, under stirring, for a time which is necessary to guarantee the complete formation of the ligand/palladium catalytic complex.

A primary or secondary alcohol insoluble in water and an aqueous solution of an acid are added to this solution so as to obtain a biphasic system and the mixture is brought to a temperature ranging from 20 to 70°C. Oxygen is then fed at the desired pressure, defined above and the mixture is reacted, under vigorous stirring, at a constant temperature.

Solvents which can be used for the preparation of the catalyst used in the process of the present invention can be aliphatic, aromatic hydrocarbons, aliphatic or aromatic chlorinated hydrocarbons, linear or cyclic ethers immiscible with water. Examples of solvents suitable for the purposes of the present invention can be selected from benzene, toluene, chlorobenzene, dichloromethane, acetophenone, chloronaphthalene, 1,2,4-trichlorobenzene, methyl-terbutyl-ketone, methylisobutyl-ketone, p-fluoroacetophenone, p-methylacetophenone, anisol, benzonitrile.

The reaction is typically carried out at a temperature of between 20° and 100°C and for a period of time ranging from 15 minutes to 10 hours. It is preferable to operate at a temperature ranging from 20° to 70°C and for a period of time ranging from 30 minutes to 3 hours.

At the end of the reaction the aqueous phase, containing the hydrogen peroxide, is separated from the organic phase, containing the catalytic complex and the ketone produced during the reaction, by means of the usual separation techniques.

The aqueous phase can be used directly or it can be further concentrated using the known techniques as described for example in patents DE-2.233.159, DE-2.125.199 and DE-1.945.754.

The organic phase can be reused in a subsequent synthesis cycle of hydrogen peroxide operating as described above. The process in continuous can be carried out according to the conventional techniques removing the hydrogen peroxide and reintegrating the reagents.

The term "hourly turnover of palladium", as used in the present description, relates to the efficiency of the catalyst and is calculated as a molar ratio between the hydrogen peroxide produced in 1 hour and the palladium charged.

The following examples, whose sole purpose is to describe the present invention in greater detail, should not be considered as restricting its scope in any way.

Example 1

11.2 mg (0.05 mmoles) of palladium acetate, 36 mg (0.1 mmoles) of 2,9-dimethyl-4,7-diphenyl-1,10-phenanthroline (batocuproine) (molar ratio ligand:palladium = 2:1) and 5 ml of chlorobenzene are charged into a 50 ml glass flask. The mixture is maintained under stirring, at room temperature for 2 hours. The operating solution thus obtained is kept unaltered for several days. 0.5 ml of operating solution, corresponding to 0.005 mmoles of catalyst, are then diluted in 4.5 ml of cyclohexanol.

25 mg (0.06 mmoles) of perfluoro-octanic acid (molar ratio acid:palladium = 12:1) are added to this solution and the mixture is left under stirring for 1 hour at 60°C. 7 ml of water are then added to the mixture and the whole mixture is transferred to an autoclave equipped with a glass ampule and magnetic stirrer. The reactor is pressurized with 5 atms of oxygen and the reaction is carried out under vigorous stirring, at a temperature of 70°C. After 1 hour the reactor is depressurized and the aqueous phase is separated from the organic phase. An aliquot (0.5 ml) of the organic phase is titrated with a solution of potassium permanganate to determine the concentration of hydrogen peroxide, which proves to be equal to 0.54% by weight. This corresponds to an hourly turnover of palladium of 221.

Examples 2-10

Effect of the alcohols

The reaction is carried out as described in example 1, but using different types of alcohols. The results are shown in table 1.

Table 1

| Ex. | Alcohol | $H_2O_2$ | TN $hr^{-1}$ |
|---|---|---|---|
| 2 | 1-phenylethanol | 0.37 | 152 |
| 3 | 1-phenylpropanol | 0.10 | 44 |
| 4 | 1-phenylpropan-2-ol | 0.30 | 123 |

Table 1 (continued)

| Ex. | Alcohol | $H_2O_2$ | TN $hr^{-1}$ |
|---|---|---|---|
| 5 | 2-octanol | 0.08 | 34 |
| 6 | n-pentanol | 0.26 | 105 |
| 7 | 2-ethyl-hexanol | 0.34 | 138 |
| 8 | n-octanol | 0.33 | 134 |
| 9 | benzyl alcohol | 0.31 | 127 |
| 10 | 4-methoxybenzyl alc. | 0.08 | 35 |

Examples 11-15

Effect of the acid

The reaction is carried out under the same operating conditions as example 1, but using various types of acid. The results obtained are indicated in table 2.

Table 2

| Ex. | Acid | $H_2O_2$ | TN $hr^{-1}$ |
|---|---|---|---|
| 11 | $CF_3COOH$ | 0.36 | 148 |
| 12 | HCl | 0.12 | 49 |
| 13 | $CH_3COOH$ | 0.18 | 76 |
| 14 | $H_2SO_4$ | 0.19 | 78 |
| 15 | $H_3PO_4$ | 0.22 | 91 |

Examples 16-19

Effect of the oxygen pressure

The reaction is carried out under the same operating conditions as example 1, but varying the oxygen pressure. The results are indicated in table 3.

Table 3

| Ex. | $pO_2$atm | $H_2O_2$ | TN $hr^{-1}$ |
|---|---|---|---|
| 16 | 5 | 0.54 | 221 |
| 17 | 10 | 0.545 | 223 |
| 18 | 20 | 0.55 | 226 |
| 19 | 50 | 0.56 | 230 |

The values shown in table 3 show that the reaction is not particularly influenced by the oxygen pressure.

Examples 20-21

The reaction is carried out as described in example 1, but using different nitrogenated ligands. The results are indicated in table 4.

Table 4

| Ex. | ligand | $H_2O_2$ | TN $hr^{-1}$ |
|---|---|---|---|
| 20 | 2,9-dimethylphenanthroline | 0.28 | 115 |
| 21 | 2,4,6-tri-(2-pyridyl)-1,3,5-triazine | 0.16 | 66 |

Examples 22-23

The reaction is carried out under the same operating conditions as example 1, but at different temperatures.

The results are shown in table 5.

Table 5

| Ex. | T°C | $H_2O_2$ | TN $hr^{-1}$ |
|---|---|---|---|
| 22 | 30 | 0.24 | 101 |
| 23 | 50 | 0.42 | 173 |

Example 24

Preparation of the supported catalyst

1 g of strong cation exchange resins of the type Amberlite$^R$ IR200 in acid form and Amberlist$^R$ 15 (Rhom & Haas) is treated with methanol and chlorobenzene and then dried under vacuum. The resins are then each suspended in 3 ml of operating solution prepared as described in example 1, corresponding to 0.03 mmoles of catalyst. The suspensions are left under stirring for 3 hours at room temperature, until the complete decolouring of the solution.

The resins supported by the reaction mixtures are then separated by filtration and dried under vacuum. The resins thus prepared contain 0.03 mmoles of catalyst per g of resin, corresponding to 3 ‰ of Pd.

Example 25

Reaction with the supported catayst

0.166 g of heterogeneous catalyst, prepared as described in example 26, corresponding to 0.005 mmoles of palladium, 5 ml of cyclohexanol and 7 ml of distilled water are charged into an autoclave equipped with a glass ampule and magnetic stirrer.

The reactor is pressurized with 50 atms of oxygen and the reaction is carried out under vigorous stirring, at a temperature of 70°C. After 1 hour the reactor is depressurized and the aqueous phase is separated from the organic phase. An aliquot (0.5 ml) of the aqueous phase is titrated with a solution of potassium permanganate to determine the concentration of hydrogen peroxide.

The results are shown in table 6.

Table 6

| Type of resin | $H_2O_2$ | TN $hr^{-1}$ |
|---|---|---|
| Amberlite$^R$ IR200 | 0.13 | 55 |
| Amberlist$^R$ 15 | 0.16 | 66 |

Example 26

100 mg (0.44 mmoles) of palladium acetate and, subsequently, 193 mg (0.53 mmoles) of batocuproine are charged into a 250 ml glass flask containing 10 ml of toluene. The solution is left under stirring, at room temperature for 30 minutes, 1.5 ml of trifluoroacetic acid are then added and the mixture is reacted for 2 hours at room temperature. The solution is cooled on ice and hexane is added until the precipitation of yellow crystals. These are left for a night at 4°C, and the crystals of palladium-batocuproine-trifluoroacetate are then filtered. After drying under vacuum, 183 mg of product are obtained, with a yield of 60%.

Example 27

3 mg (0.004 mmoles) of the catalytic complex prepared as in example 28, are dissolved in 5 ml of cyclohexanol. 7 ml of a solution of trifluoroacetic acid at 0.1% are then added and the reactor is pressurized with 5 atms of oxygen. The reaction is carried out for 1 hour under vigorous stirring maintaining the temperature at 70°C. At the end of the reaction hydrogen peroxide is obtained at a concentration of 0.45% corresponding to a turnover of palladium of 232 cycles.

Example 28

The reaction is carried out under the same experimental conditions as example 1, but using 50 atms of air.

After 1 hour hydrogen peroxide is obtained at 0.3%, corresponding to a turnover of palladium of 124 cycles.

Example 29 (comparative)

5 ml of cyclohexanol, 7 ml of distilled water and 25 mg of perfluoro-octanic acid are charged into an autoclave equipped with a glass ampule and magnetic stirrer.

The reactor is pressurized with 5 atms of oxygen and the reaction is carried out under vigorous stirring, at a temperature of 70°C for 1 hour. After depressurization, an aliquot (0.5 ml) of the aqueous phase is titrated with a solution of potassium permanganate, but no traces of the formation of hydrogen peroxide are revealed.

The reaction is repeated under the same conditions charging 50 atms of oxygen, but also in this case there is no formation of hydrogen peroxide.

## Claims

1. A process for the synthesis of hydrogen peroxide by the reaction between oxygen and a primary or secondary alcohol in an alcohol/water biphasic system, characterized in that it is carried out in the presence of a catalytic complex consisting of:

   (a) an organic or inorganic salt of palladium;
   (b) an aromatic nitrogenated mono or polydentate ligand (chel) capable of forming stable complexes with the palladium atom.

2. The process according to claim 1, characterized in that the catalytic complex additionally comprises an organic or inorganic acid.

3. The process according to claim 1, characterized in that the palladium salt is selected from palladium acetate, palladium nitrate and palladium sulfate.

4. The process according to claim 3, characterized in that the palladium salt is palladium acetate.

5. The process according to claim 1, characterized in that the monodentate nitrogenated ligand is a nitrogenated heterocyclic compound selected from pyridine and alkylpyridine.

6. The process according to claim 1, characterized in that the polydentate nitrogenated ligand is selected from compounds having formula (I)

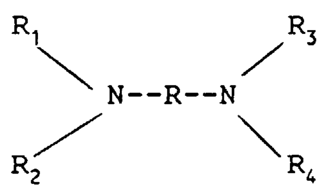

(I)

   wherein:
   R represents a $C_2$-$C_4$ alkyl radical possibly substituted with an alkyl or aryl group; $R_1$-$R_4$, the same or different, each represent a $C_1$-$C_{10}$ alkyl radical, a $C_3$-$C_{10}$ cycloalkyl radical or a $C_6$-$C_{12}$ aromatic radical possibly substituted with a $C_1$-$C_4$ alkyl or alkoxyl radical.

7. The process according to claim 1, characterized in that the nitrogenated ligand is selected from compounds having formula (II)

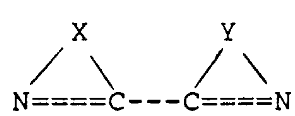

(II)

wherein:
X and Y, the same or different, represent a bridged organic group having at least three atoms in the bridge of which at least two are carbon atoms.

**8.** The process according to claim 7, wherein when, as well as the carbon atoms, groups X and Y contain other atoms, these are preferably selected from oxygen or nitrogen.

**9.** The process according to claim 1, characterized in that the polydentate nitrogenated ligand is selected from 2,2'-bipyridyl, 4,4'-dimethyl-2,2'bipyridyl, 4,4'-diphenyl-2,2'bipyridyl, 5-methyl-2,2'bipyridyl, 5,5'-dimethyl-2,2'-bypyridy-1,1,10-phenanthroline, 4-methyl-1,10-phenanthroline, 5-methyl-1,10-phenanthroline, 4,7-dimethyl-1,10-phenanthroline, 3,8-dimethyl-1,10-phenanthroline, 4,7-diphenyl-1,10-phenanthroline, 4,7-dichloro-1,10-phenanthroline, 3,4,7,8-tetramethyl-1,10-phenanthroline, 1,2-N,N,N',N'-tetramethylpropanediamine, 1,3,N,N,N',N'-tetramethylethylenediamine,4,4'-dimethyl-5,5'-bioxazole, 2,2'-bipyrimidine, 2,2'-tetrahydro-bioxazole, 2,9-dichloro-1,10-phenanthroline, 2,9-dibutyl-phenanthroline, 2,9-di-methylphenanthroline, 2,9-dimethyl-4,7-diphenyl-1,10-phenanthroline, 2,4,6-tri-(2-pyridyl)-1,3,5-triazine and 6,7-dimethyl-2,3-di(2-pyridyl)-quinoxaline.

**10.** The process according to claim 9, characterized in that the ligand is selected from 2,4,6-tri-(2-pyridyl)-1,3,5-triazine, 6,7-dimethyl-2,3-di(2-pyridyl)-quinoxaline, and phenanthrolines substituted in position 2,9 such as 2,9-dichloro-1,10-phenanthroline, 2,9-dimethyl-4,7-diphenyl-1,10-phenanthroline and 2,9-dibutyl-phenanthroline.

**11.** The process according to the claims from 1 onwards, characterized in that the molar ratio ligand:palladium is between 1:1 and 20:1.

**12.** The process according to claim 11, characterized in that the molar ratio ligand:palladium is between 1:1 and 3:1.

**13.** The process according to claim 1, characterized in that the concentration of palladium salt is between 0.0001 and 0.05 moles of palladium salt per litre of organic phase.

**14.** The process according to claim 13, characterized in that the concentration of palladium salt is between 0.0005 and 0.001 moles of palladium salt per litre of organic phase.

**15.** The process according to claim 2, characterized in that the acid is selected from phosphoric acid, acetic acid, sulfuric acid, hydrochloric acid, benzoic acid, p-toluic acid, trimethylbenzoic acid, methanesulfonic acid, benzenesulfonic acid and diphenylphosphinic acid or from perfluorinated acids having the formula $C_nF_{2n+1}COOH$ with n between 1 and 15.

**16.** The process according to claim 15, wherein the acid is selected from perfluoro-octanoic acid and trifluoroacetic acid.

**17.** The process according to claim 2, characterized in that the molar ratio acid:palladium is between 1:1 and 60:1.

**18.** The process according to claim 17, characterized in that the molar ratio acid:palladium is between 2:1 and 20:1.

**19.** The process according to claim 1, characterized in that the alcohols are selected from linear or branched, primary or secondary aliphatic alcohols substituted by alkyl or aryl residues, immiscible with water.

**20.** The process according to claim 19, characterized in that the alcohols are selected from n-amyl alcohol, n-butanol, cyclohexanol, phenylethyl alcohol, phenylpropyl alcohol, n-octanol, benzyl alcohol, methoxy-benzyl alcohol.

**21.** The process according to claim 20, wherein the alcohol is selected from cyclohexanol, phenylethyl alcohol and n-octanol.

**22.** The process according to claim 1, characterized in that the reaction is carried out at an oxygen pressure ranging from 1 to 100 atm.

**23.** The process according to claim 22, characterized in that the pressure is between 5 atm and 70 atm.

**24.** The process according to claim 1, wherein the reaction is carried out using air as oxygen source.

**25.** The process according to claim 1, characterized in that the reaction is carried out at a temperature ranging from 20 to 100°C.

**26.** The process according to claim 25, wherein the temperature is between 30°C and 70°C.

**27.** The process according to claim 1, characterized in that the catalytic complex is used in the form of preformed complex.

**28.** The process according to claim 1, characterized in that the catalytic complex is prepared in situ in an organic solvent immiscible with water selected from aliphatic, aromatic hydrocarbons, aliphatic or aromatic chlorinated hydrocarbons, linear or cyclic ethers, ketones, or their mixtures.

**29.** The process according to claim 28, characterized in that the organic solvent is selected from benzene, toluene, chlorobenzene, anisol, benzonitrile, chloronaphthalene, methyl-terbutyl-ketone, methyl-isobutyl-ketone, 1,2,4-trichlorobenzene, acetophenone, p-fluoroacetophenone, p-methylacetophenone.

**30.** The process according to claim 1, characterized in that the catalytic complex is immobilized on an inert porous carrier selected from cation exchange resins of the macroporous polymeric type.

**Patentansprüche**

**1.** Verfahren zur Herstellung von Wasserstoffperoxid mittels der Reaktion von Sauerstoff und einem primären oder sekundären Alkohol in einem Zweiphasen-Alkohol/ Wassersystem, dadurch gekennzeichnet, daß das Verfahren in Gegenwart eines katalytischen Komplexes durchgeführt wird, der besteht aus:

(a) einem organischen oder anorganischen Palladium-Salz;
(b) einem aromatischen, stickstoffhaltigen ein- oder mehrzähnigen Liganden (chel), welcher in der Lage ist, stabile Komplexe mit dem Palladium-Atom zu bilden.

**2.** Verfahren nach Anspruch 1, dadurch gekennzeichnet, daß der katalytische Komplex zusätzlich eine organische oder anorganische Säure umfaßt.

**3.** Verfahren nach Anspruch 1, dadurch gekennzeichnet, daß das Palladium-Salz ausgewählt ist aus Palladiumacetat, Palladiumnitrat und Palladiumsulfat.

**4.** Verfahren nach Anspruch 3, dadurch gekennzeichnet, daß das Palladium-Salz Palladiumacetat ist.

**5.** Verfahren nach Anspruch 1, dadurch gekennzeichnet, daß der einzähnige stickstoffhaltige Ligand eine stickstoffhaltige heterozyklische Verbindung, ausgewählt aus Pyridin und Alkylpyridin, ist.

**6.** Verfahren nach Anspruch 1, dadurch gekennzeichnet, daß der mehrzähnige stickstoffhaltige Ligand ausgewählt ist aus Verbindungen der Formel (I)

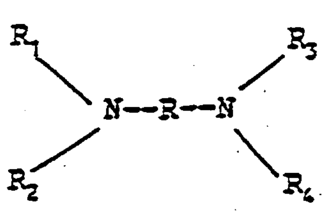

(I)

worin:
R ein $C_2$-$C_4$-Alkyl-Radikal, gegebenenfalls substituiert mit einer Alkyl- or Aryl-Gruppe; $R_1$ bis $R_4$, gleich oder verschieden voneinander sind, wobei jeder Rest ein $C_1$-$C_{10}$-Alkyl-Radikal, ein $C_3$-$C_{10}$-Cycloalkylradikal oder ein aromatisches $C_6$-$C_{12}$-Radikal repräsentiert, gegebenenfalls substituiert mit einem $C_1$-$C_4$-Alkyl- oder Alkoxyl-Radikal.

**7.** Verfahren nach Anspruch 1, dadurch gekennzeichnet, daß der stickstoffhaltige Ligand ausgewählt ist aus Verbindungen der Formel (II)

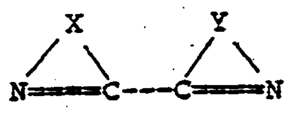

(II)

worin:
X und Y gleich oder verschieden sind und eine brückenbildende organische Gruppe mit mindestens drei Atomen in der Brücke repräsentieren, von welchen mindestens zwei Kohlenstoffatome sind.

**8.** Das Verfahren nach Anspruch 7, worin, wenn die Gruppen X und Y neben den Kohlenstoffatomen andere Atome enthalten, diese vorzugsweise ausgewählt sind aus Sauerstoff und Stickstoff.

**9.** Verfahren nach Anspruch 1, dadurch gekennzeichnet, daß die mehrzähnigen stickstoffhaltigen Liganden ausgewählt sind 2,2'-Bipyridyl, 4,4'-Dimethyl-2,2'-bipyridyl, 4,4'-Diphenyl-2,2'-bipyridyl, 5-Methyl-2,2'-bipyridyl, 5,5'-Dimethyl-2,2'-bipyridyl, 1,10-Phenanthrolin, 4-Methyl-1,10-phenanthrolin, 5-Methyl-1,10 phenanthrolin, 4,7-Dimethyl-1,10-phenanthrolin, 3,8-Dimethyl-1,10-phenanthrolin, 4,7-Diphenyl-1,10-phenanthrolin, 4,7-Dichloro-1,10-phenanthrolin, 3,4,7,8-Tetramethyl-1,10-phenanthrolin, 1,2-N,N,N',N'-Tetramethylpropandiamin, 1,3-N,N,N', N'-Tetramethylethylendiamin, 4,4'-Dimethyl-5,5'-bioxazol, 2,2'-Bipyrimidin, 2,2'-Tetrahydro-bioxazol, 2,9-Dichloro-1,10-phenanthrolin, 2,9-Dibutyl-phenanthrolin, 2,9-Dimethyl-phenanthrolin, 2,9-Dimethyl-4,7-diphenyl-1,10-phenanthrolin, 2,4,6-Tri-(2-pyridyl)-1,3,5-triazin und 6,7-Dimethyl-2,3-di(2-pyridyl)-chinoxalin.

**10.** Verfahren nach Anspruch 9, dadurch gekennzeichnet, daß der Ligand ausgewählt ist aus 2,4,6-Tri-(2-pyridyl)-1,3,5-triazin, 6,7-Dimethyl-2,3-di(2-pyridyl)-chinoxalin und Phenanthrolinen, welche in den 2,9-Positionen substituiert sind, wie z. B. 2,9-Dichloro-1,10-phenanthrolin, 2,9-Dimethyl-4,7-diphenyl-1,10-phenanthrolin und 2,9-Dibutyl-phenanthrolin.

**11.** Verfahren nach einem der Ansprüche 1 aufwärts, dadurch gekennzeichnet, daß das Mol-Verhältnis Ligand:Palladium zwischen 1:1 und 20:1 liegt.

**12.** Verfahren nach Anspruch 11, dadurch gekennzeichnet, daß das Mol-Verhältnis Ligand:Palladium zwischen 1:1 und 3:1 liegt.

**13.** Verfahren nach Anspruch 1, dadurch gekennzeichnet, daß die Konzentration an Palladium-Salz zwischen 0,0001 und 0,05 Mol Palladium-Salz pro Liter organische Phase liegt.

**14.** Verfahren nach Anspruch 13, dadurch gekennzeichnet, daß die Konzentration an Palladium-Salz zwischen 0,0005 und 0,001 Mol Palladium-Salz pro Liter organische Phase liegt.

**15.** Verfahren nach Anspruch 2, dadurch gekennzeichnet, daß die Säure ausgewählt ist aus Phosphorsäure, Essigsäure, Schwefelsäure, Salzsäure, Benzoesäure, p-Toluylsäure, Trimethylbenzoesäure, Methansulfonsäure, Benzolsulfonsäure und Diphenylphosphinsäure oder aus perfluorierten Säuren, welche die Formel $C_nF_{2n+1}$ COOH aufweisen, mit n zwischen 1 und 15.

**16.** Verfahren nach Anspruch 15, worin die Säure ausgewählt ist aus Perfluor-n-oktansäure und Trifluoressigsäure.

**17.** Verfahren nach Anspruch 2, dadurch gekennzeichnet, daß das Mol-Verhältnis Säure:Palladium zwischen 1:1 und 60:1 liegt.

**18.** Verfahren nach Anspruch 17, dadurch gekennzeichnet, daß das Mol-Verhältnis Säure:Palladium zwischen 2:1 und 20:1 liegt.

**19.** Verfahren nach Anspruch 1, dadurch gekennzeichnet, daß die Alkohole ausgewählt sind aus linearen oder verzweigten, primären oder sekundären aliphatischen Alkoholen, substituiert mit Alkyl- oder Aryl-Resten, welche unmischbar mit Wasser sind.

**20.** Verfahren nach Anspruch 19, dadurch gekennzeichnet, daß die Alkohole ausgewählt aus n-Amylalkohol, n-Butanol, Cyclohexanol, Phenylethylalkohol, Phenylpropylalkohol, n-Oktanol, Benzylalkohol, Methoxy-benzylalkohol.

**21.** Verfahren nach Anspruch 20, worin der Alkohol ausgewählt ist aus Cyclohexanol, Phenylethylalkohol und n-Oktanol.

**22.** Verfahren nach Anspruch 1, dadurch gekennzeichnet, daß die Reaktion bei einem Sauerstoffdruck im Bereich von 1 - 100 atm durchgeführt wird.

**23.** Verfahren nach Anspruch 22, dadurch gekennzeichnet, daß der Druck im Bereich zwischen 5 atm und 70 atm liegt.

**24.** Verfahren nach Anspruch 1, worin die Reaktion unter Verwendung von Luft als Sauerstoffquelle durchgeführt wird.

**25.** Verfahren nach Anspruch 1, dadurch gekennzeichnet, daß die Reaktion bei einer Temperatur im Bereich von 20 bis 100° C durchgeführt wird.

**26.** Verfahren nach Anspruch 25, worin die Temperatur zwischen 30° C und 70° C liegt.

**27.** Verfahren nach Anspruch 1, dadurch gekennzeichnet, daß der katalytische Komplex in der Form eines vorgebildeten Komplexes verwendet wird.

**28.** Verfahren nach Anspruch 1, dadurch gekennzeichnet, daß der katalytische Komplex in situ in einem organischen Lösemittel hergestellt wird, welches unmischbar mit Wasser ist, ausgewählt aus aliphatischen, aromatischen Kohlenwasserstoffen, aliphatischen oder aromatischen chlorierten Kohlenwasserstoffen, linearen oder cyclischen Ethern, Ketonen oder deren Mischungen.

**29.** Verfahren nach Anspruch 28, dadurch gekennzeichnet, daß das organische Lösemittel ausgewählt ist aus Benzol, Toluol, Chlorbenzol, Anisol, Benzonitril, Chlornaphthalin, Methyl-terbutylketon, Methyl-isobutylketon, 1,2,4-Trichlorbenzol, Acetophenon, p-Fluoracetophenon, p-Methylacetophenon.

**30.** Verfahren nach Anspruch 1, dadurch gekennzeichnet, daß der katalytische Komplex auf einem inerten porösen Träger aus Kationen-Austauscher-Harzen vom makroporösen Polymer-Typ immobilisiert ist.

## Revendications

**1.** Procédé pour la synthèse du peroxyde d'hydrogène à l'aide de la réaction entre l'oxygène et un alcool primaire ou secondaire dans un système biphasique alcool/eau, caractérisé en ce qu'il est effectué en présence d'un complexe catalytique composé:

(a) d'un sel organique ou inorganique du palladium;
(b) d'un ligand mono ou polydentate azoté aromatique (chél) capable de former des complexes stables avec l'atome de palladium.

**2.** Procédé selon la revendication 1, caractérisé en ce que le complexe catalytique comprend de plus un acide organique ou inorganique.

**3.** Procédé selon la revendication 1, caractérisé en ce que le sel de palladium est choisi parmi l'acétate de palladium, le nitrate de palladium et le sulfate de palladium.

**4.** Procédé selon la revendication 3, caractérisé en ce que le sel de palladium est l'acétate de palladium.

**5.** Procédé selon la revendication 1, caractérisé en ce que le ligand monodentate azoté est un composé hétérocyclique azoté choisi parmi la pyridine et l'alkylpyridine.

**6.** Procédé selon la revendication 1, caractérisé en ce que le ligand polydentate azoté est choisi parmi les composés ayant la formule (I)

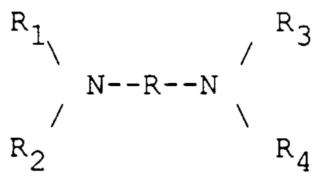

(I)

dans laquelle:
R représente un radical alkyle en $C_2$ à $C_4$ éventuellement substitué par un groupe alkyle ou aryle; $R_1$ à $R_4$, identiques ou différents, représentent chacun un radical alkyle en $C_1$ à $C_{10}$, un radical cycloalkyle en $C_3$ à $C_{10}$ ou un radical aromatique en $C_6$ à $C_{12}$ éventuellement substitué par un radical alkyle en $C_1$ à $C_4$ ou alcoxyle.

**7.** Procédé selon la revendication 1, caractérisé en ce que le ligand azoté est choisi parmi les composés ayant la formule (II):

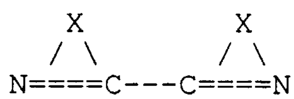

(II)

dans laquelle:
X et Y, identiques ou différents, représentent un groupe organique ponté ayant au moins trois atomes dans le pont dont au moins deux sont des atomes de carbone.

**8.** Procédé selon la revendication 7, dans lequel quand, en plus des atomes de carbone, les groupes X et Y contiennent d'autres atomes, ceux-ci sont choisis de préférence parmi l'oxygène ou l'azote.

**9.** Procédé selon la revendication 1, caractérisé en ce que le ligand azoté polydentate est choisi parmi le 2,2'-bipyridyle, le 4,4'-diméthyl-2,2'-bipyridyle, le 4,4'-diphényl-2,2'-bipyridyle, le 5-méthyl-2,2'-bipyridyle, la 5,5'-diméthyl-2,2'-bipyridyl-1,1,10-phénanthroline, la 4-méthyl-1,10-phénanthroline, la 5-méthyl-1,10-phénanthroline, la 4,7-diméthyl-1,10-phénanthroline, la 3,8-diméthyl-1,10-phénanthroline, la 4,7-diphényl-1,10-phénanthroline, la 4,7-dichloro-1,10-phénanthroline, la 3,4,7,8-tétraméthyl-1,10-phénanthroline, la 1,2-N,N,N',N'-tétraméthylpropanediamine, la 1,3,N,N,N',N'-tétraméthyléthylènediamine-4,4'-diméthyl-5,5'-bioxazole, la 2,2'-bipyrimidine, la 2,2'-tétrahydro-bioxazole, la 2,9-dichloro-1,10-phénanthroline, la 2,9-dibutyl-phénanthroline, la 2,9-diméthylphénanthroline, la 2,9-diméthyl-4,7-diphényl-1,10-phénanthroline, la 2,4,6-tri-(2-pyridyl)-1,3,5-triazine et la 6,7-diméthyl-2,3-di (2-pyridyl)-quinoxaline.

**10.** Procédé selon la revendication 9, caractérisé en ce que le ligand est choisi parmi la 2,4,6-tri-(2-pyridyl)-1,3,5-triazine, la 6,7-diméthyl-2,3-di(2-pyridyl)-quinoxaline et les phénanthrolines substituées en position 2,9, telles que la 2,9-dichloro-1,10-phénanthroline, la 2,9-diméthyl-4,7-diphényl-1,10-phénanthroline et la 2,9-dibutyl-phénanthroline.

**11.** Procédé selon les revendications 1 et plus, caractérisé en ce que le rapport molaire ligand:palladium est compris entre 1:1 et 20:1.

**12.** Procédé selon la revendication 11, caractérisé en ce que le rapport molaire ligand:palladium est compris entre 1: 1 et 3:1.

**13.** Procédé selon la revendication 1, caractérisé en ce que la concentration de sel de palladium est compris entre 0,0001 et 0,05 mole de sel de palladium par litre de phase organique.

**14.** Procédé selon la revendication 13, caractérisé en ce que la concentration de sel de palladium est compris entre 0,0005 et 0,001 mole de sel de palladium par litre de phase organique.

**15.** Procédé selon la revendication 2, caractérisé en ce que l'acide est choisi parmi l'acide phosphorique, l'acide acétique, l'acide sulfurique, l'acide chlorhydrique, l'acide benzoïque, l'acide p-toluique, l'acide triméthylbenzoïque,

l'acide méthanesulfonique, l'acide benzènesulfonique et l'acide diphénylphosphinique ou parmi les acide perfluorés ayant la formule $C_nf_{2n+1}COOH$, avec n compris entre 1 et 15.

**16.** Procédé selon la revendication 15, dans lequel l'acide est choisi parmi l'acide perfluoro-octanoïque et l'acide trifluoroacétique.

**17.** Procédé selon la revendication 2, caractérisé en ce que le rapport molaire acide: palladium est compris entre 1: 1 et 60:1.

**18.** Procédé selon la revendication 17, caractérisé en ce que le rapport molaire acide:palladium est compris entre 2: 1 et 20:1.

**19.** Procédé selon la revendication 1, caractérisé en ce que les alcools sont choisis parmi les alcools aliphatiques linéaires ou ramifiés, primaires ou secondaires substitués par des résidus alkyle ou aryle, immiscibles avec l'eau.

**20.** Procédé selon la revendication 19, caractérisé en ce que les alcools sont choisis parmi l'alcool n-amylique, le n-butanol, le cyclohexanol, l'alcool phényléthylique, l'alcool phénylpropylique, le n-octanol, l'alcool benzylique, l'alcool méthoxy-benzylique.

**21.** Procédé selon la revendication 20, dans lequel l'alcool est choisi parmi le cyclohexanol, l'alcool phényléthylique et le n-octanol.

**22.** Procédé selon la revendication 1, caractérisé en ce que la réaction est effectuée à une pression d'oxygène comprise entre 1 et 100 atm.

**23.** Procédé selon la revendication 22, caractérisé en ce que la pression est comprise entre 5 atm et 70 atm.

**24.** Procédé selon la revendication 1, dans lequel la réaction est effectuée en utilisant de l'air comme source d'oxygène.

**25.** Procédé selon la revendication 1, caractérisé en ce que la réaction est effectuée à une température comprise entre 20 et 100°C.

**26.** Procédé selon la revendication 25, dans lequel la température est comprise entre 30°C et 70°C.

**27.** Procédé selon la revendication 1, caractérisé en ce que le complexe catalytique est utilisé sous forme de complexe préformé.

**28.** Procédé selon la revendication 1, caractérisé en ce que le complexe catalytique est préparé in situ dans un solvant organique immiscible avec l'eau choisi parmi les hydrocarbures aliphatiques, aromatiques, les hydrocarbures chlorés aliphatiques ou aromatiques, les éthers linéaires ou cycliques, les cétones ou leurs mélanges.

**29.** Procédé selon la revendication 28, caractérisé en ce que le solvant organique est choisi parmi le benzène, le toluène, le chlorobenzène, l'anisol, le benzonitrile, le chloronaphtalène, la méthyl-terbutyl-cétone, la méthylisobutyl-cétone, le 1,2,4-trichlorobenzène, l'acétophénone, la p-fluoroacétophénone, la p-méthyl-acétophénone.

**30.** Procédé selon la revendication 1, caractérisé en ce que le complexe catalytique est immobilisé sur un véhicule poreux inerte choisi parmi les résines échangeuses de cations du type polymère macroporeux.